(19) Europäisches Patentamt
European Patent Office
Office européen des brevets

(11) **EP 4 692 257 A1**

(12) **EUROPEAN PATENT APPLICATION**
published in accordance with Art. 153(4) EPC


(43) Date of publication:
**11.02.2026 Bulletin 2026/07**

(21) Application number: **24779309.4**

(22) Date of filing: **08.03.2024**

(51) International Patent Classification (IPC):
***C09D 17/00*** *(2006.01)* ***C09B 67/20*** *(2006.01)*
***C09B 67/46*** *(2006.01)* ***C09C 3/10*** *(2006.01)*
***C09D 11/03*** *(2014.01)*

(52) Cooperative Patent Classification (CPC):
**C09B 67/006; C09B 67/0084; C09C 3/10; C09D 11/03; C09D 17/00**

(86) International application number:
**PCT/JP2024/009132**

(87) International publication number:
**WO 2024/203178 (03.10.2024 Gazette 2024/40)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **31.03.2023 JP 2023059325**



(71) Applicant: **FUJIFILM Corporation**
**Tokyo 106-8620 (JP)**

(72) Inventors:
- **SAKAKIBARA, Masato**
  **Ashigarakami-gun, Kanagawa 258-8577 (JP)**
- **MIZOE, Taiga**
  **Ashigarakami-gun, Kanagawa 258-8577 (JP)**
- **SUZUKI, Shota**
  **Ashigarakami-gun, Kanagawa 258-8577 (JP)**

(74) Representative: **Klunker IP Patentanwälte PartG mbB**
**Destouchesstraße 68**
**80796 München (DE)**


(54) **PIGMENT DISPERSION AND INK COMPOSITION**


(57) Provided are a pigment dispersion containing water, a pigment, and a polymer dispersant having a crosslinking structure, in which the polymer dispersant having a crosslinking structure contains a structural unit represented by Formula (1) and a structural unit represented by Formula (2); and an ink composition. $R^1$ represents a hydrogen atom or an alkyl group having 1 to 4 carbon atoms, $R^2$ represents an alkylene group having 2 to 5 carbon atoms, $R^3$ represents an aromatic group, $X^1$ and $X^2$ each independently represent -O- or -NH-, m represents an integer of 2 or more, $R^4$ represents a hydrogen atom or an alkyl group having 1 to 4 carbon atoms, $R^5$ represents an alkyl group having 8 or more carbon atoms, and $X^3$ represents -O- or -NH-.

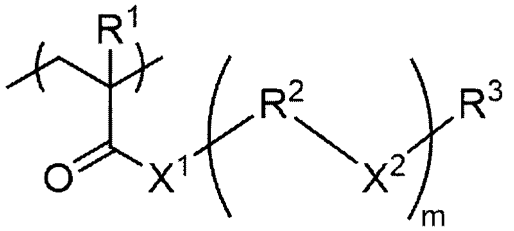
(1)

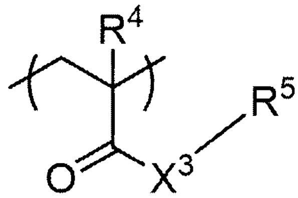
(2)


EP 4 692 257 A1

## Description

### BACKGROUND OF THE INVENTION

1. Field of the Invention

The present disclosure relates to a pigment dispersion and an ink composition.

2. Description of the Related Art

In the related art, various studies have been conducted on a pigment dispersion used in an ink composition.

For example, JP2016-069487A discloses, as an aqueous pigment dispersion in which both dispersibility and dispersion stability of a pigment are achieved at a higher level, an aqueous pigment dispersion containing an aqueous medium, a pigment, and a polymer dispersant, in which the polymer dispersant contains at least a (meth)acrylate constitutional unit having a benzene ring, a (meth)acrylate constitutional unit having an alkyl group having 12 or more carbon atoms, and a constitutional unit having an ionic group, a content of the (meth)acrylate constitutional unit having a benzene ring in the polymer dispersant is 20% to 60% by mass, a content of the (meth)acrylate constitutional unit having an alkyl group having 12 or more carbon atoms in the polymer dispersant is 10% to 40% by mass, and the polymer dispersant forms a crosslinking structure in the aqueous pigment dispersion.

### SUMMARY OF THE INVENTION

However, there is a demand for further improving temporal stability of the pigment dispersion.

An object to be achieved by an embodiment of the present disclosure is to provide a pigment dispersion and an ink composition, having excellent temporal stability.

The present disclosure includes the following aspects.

<1> A pigment dispersion comprising:

water;
a pigment; and
a polymer dispersant having a crosslinking structure,
in which the polymer dispersant having a crosslinking structure further contains a structural unit represented by Formula (1) and a structural unit represented by Formula (2),

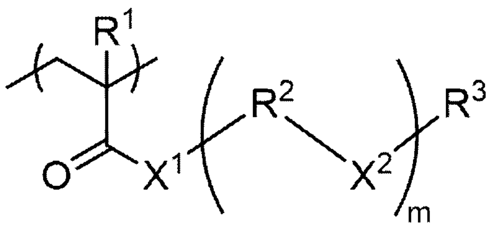
(1)

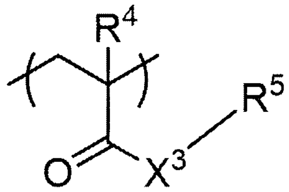
(2)

In Formula (1),
$R^1$ represents a hydrogen atom or an alkyl group having 1 to 4 carbon atoms,
$R^2$ represents an alkylene group having 2 to 5 carbon atoms,
$R^3$ represents an aromatic group,
$X^1$ and $X^2$ each independently represent -O- or -NH-, and
m represents an integer of 2 or more.
In Formula (2),
$R^4$ represents a hydrogen atom or an alkyl group having 1 to 4 carbon atoms,
$R^5$ represents an alkyl group having 8 or more carbon atoms, and
$X^3$ represents -O- or -NH-.

<2> The pigment dispersion according to <1>,

in which the polymer dispersant having a crosslinking structure further contains a structural unit derived from a monomer containing an acid group, and a hydrophilicity/hydrophobicity ratio represented by the following

expression is 8 or more,
the hydrophilicity/hydrophobicity ratio
= (a mass fraction of the structural unit represented by Formula (2) in a total mass of the polymer dispersant having a crosslinking structure × the number of carbon atoms in the alkylene group represented by $R^2$ in Formula (2))/(a mass fraction of the structural unit derived from the monomer containing an acid group in the total mass of the polymer dispersant having a crosslinking structure).

<3> The pigment dispersion according to <1> or <2>,

in which an Ar valence of the polymer dispersant having a crosslinking structure, which is represented by the following expression, is 0.4 mmol/g to 2.9 mmol/g,
the Ar valence
= (the number of mmol of the structural unit represented by Formula (1) per 1 g of the polymer dispersant having a crosslinking structure) × (the number of aromatic rings in the structural unit represented by Formula (1)).

<4> The pigment dispersion according to any one of <1> to <3>,
in which $R^2$ in Formula (1) represents an alkylene group having 2 carbon atoms.
<5> The pigment dispersion according to any one of <1> to <4>,

in which the polymer dispersant having a crosslinking structure is formed by crosslinking an uncrosslinked polymer dispersant, and
the uncrosslinked polymer dispersant contains the structural unit represented by Formula (1), the structural unit represented by Formula (2), and an acid group, and 10% to 90% of a total number of acid groups contained are neutralized.

<6> An ink composition comprising:
the pigment dispersion according to any one of <1> to <5>.

According to the embodiment of the present disclosure, there are provided a pigment dispersion and an ink composition, having excellent temporal stability.

DESCRIPTION OF THE PREFERRED EMBODIMENTS

In the present specification, the numerical ranges shown using "to" means ranges including the numerical values described before and after "to" as the minimum value and the maximum value.
In a numerical range described in a stepwise manner in the present specification, an upper limit value or a lower limit value described in a certain numerical range may be replaced with an upper limit value or a lower limit value in another numerical range described in a stepwise manner. In addition, in the numerical range described in the present specification, an upper limit value and a lower limit value described in a certain numerical range may be replaced with values shown in Examples.
In the present specification, in a case where a plurality of substances corresponding to each component in a composition is present, the amount of each component in the composition means the total amount of the plurality of substances present in the composition, unless otherwise specified.
In the present specification, a combination of two or more preferred aspects is a more preferred aspect.
In the present specification, the meaning of the term "step" includes not only an independent step but also a step whose intended purpose is achieved even in a case in which the step is not clearly distinguished from other steps.
In the present specification, "(meth)acrylate" is a concept including both acrylate and methacrylate. In addition, "(meth)acryl" is a concept that includes both acryl and methacryl.
In the present disclosure, unless otherwise specified, even in a case where an element is expressed in a singular form, a plurality of elements are not excluded unless a technical contradiction occurs.

[Pigment dispersion]

The pigment dispersion according to the present disclosure contains water, a pigment, and a polymer dispersant having a crosslinking structure, in which the polymer dispersant having a crosslinking structure further contains a structural unit represented by Formula (1) (hereinafter, also referred to as "unit of Formula (1)") and a structural unit represented by Formula (2) (hereinafter, also referred to as "unit of Formula (2)").

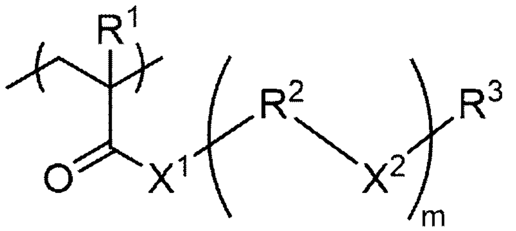 (1) 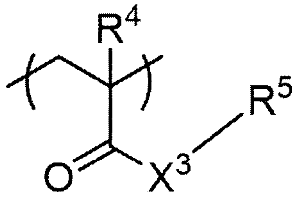 (2)

In Formula (1),

$R^1$ represents a hydrogen atom or an alkyl group having 1 to 4 carbon atoms,
$R^2$ represents an alkylene group having 2 to 5 carbon atoms,
$R^3$ represents an aromatic group,
$X^1$ and $X^2$ each independently represent -O- or -NH-, and
m represents an integer of 2 or more.
In Formula (2),
$R^4$ represents a hydrogen atom or an alkyl group having 1 to 4 carbon atoms,
$R^5$ represents an alkyl group having 8 or more carbon atoms, and
$X^3$ represents -O- or -NH-.

The pigment dispersion according to the present disclosure has excellent temporal stability.

Therefore, an ink composition containing the pigment dispersion according to the present disclosure (for example, an ink composition produced by adding other components to the pigment dispersion according to the present disclosure) also has excellent temporal stability.

The reason why the pigment dispersion according to the present disclosure has excellent temporal stability is presumed as follows.

In the pigment dispersion according to the present disclosure, it is considered that the pigment is dispersed in a state in which the polymer dispersant is adsorbed on a surface of the pigment. It is considered that the polymer dispersant is adsorbed to the pigment with the aromatic group represented by $R^3$ in the unit of Formula (1) as an adsorbing group.

The polymer dispersant has a crosslinking structure. In this manner, it is considered that the release of the polymer dispersant from the surface of the pigment is suppressed, and as a result, the decrease in dispersion stability of the pigment (that is, the decrease in temporal stability of the pigment dispersion) due to the release is suppressed.

Furthermore, in the polymer dispersant, m in Formula (1) is an integer of 2 or more. That is, the polymer dispersant contains the unit of Formula (1) in which a repetition number of "$-R^2-X^2-$" structure (for example, an alkyleneoxy structure) is 2 or more. In this manner, it is considered that affinity of the polymer dispersant to water is improved, and as a result, a phenomenon in which the polymer dispersants are aggregated in a stringing manner (random coil) in an aqueous pigment dispersion is suppressed. Accordingly, it is considered that the polymer dispersant is easily adsorbed to the pigment by the aromatic group represented by $R^3$ in the unit of Formula (1) as an adsorbing group, and thus the dispersion stability of the pigment (that is, temporal stability of the pigment dispersion) is improved.

Furthermore, in the polymer dispersant, $R^5$ in Formula (2) is an alkyl group having 8 or more carbon atoms. That is, the polymer dispersant contains the unit of Formula (2) including an alkyl group ($R^5$) having 8 or more carbon atoms, which is a hydrophobic group. In this manner, it is considered that excessive increase in the hydrophilicity of the entire polymer dispersant is suppressed, and as a result, the decrease in the dispersion stability of the pigment (that is, the decrease in the temporal stability of the pigment dispersion) is suppressed.

In the pigment dispersion according to the present disclosure, as described above, it is considered that the action of the crosslinking structure, the action of the unit of Formula (1), and the action of the unit of Formula (2) in the polymer dispersant are combined to achieve excellent temporal stability.

<Water>

The pigment dispersion according to the present disclosure contains water.

A content of the water with respect to the total amount of the pigment dispersion is preferably 40% by mass or more, more preferably 50% by mass or more, still more preferably 60% by mass or more, and even more preferably 70% by mass or more.

The upper limit value of the content of the water with respect to the total amount of the pigment dispersion is, for example, 98% by mass, 95% by mass, 90% by mass, or the like.

<Pigment>

The pigment dispersion according to the present disclosure contains at least one pigment.

The pigment is not particularly limited, and may be an organic pigment or an inorganic pigment.

Examples of the pigment include pigments described in "Encyclopedia of Pigments" edited by Seishiro Ito (2000), "Industrial Organic Pigments", W. Herbst, K. Hunger, and pigments described in known documents such as JP2002-12607A, JP2002-188025A, JP2003-26978A, JP2003-342503A, and JP2015-193729A.

Examples of the pigment include polycyclic pigments such as an azolake pigment, an azo pigment, a phthalocyanine pigment, a perylene pigment, a perinone pigment, an anthraquinone pigment, a quinacridone pigment, a dioxazine pigment, a diketopyrrolopyrrole pigment, a thioindigo pigment, an isoindolinone pigment, and a quinophthalone pigment; organic pigments such as a nitro pigment, a nitroso pigment, aniline black, and a daylight fluorescent pigment; and inorganic pigments such as titanium oxide, iron oxide, and carbon black.

As the pigment, an azo pigment, a phthalocyanine pigment, an anthraquinone pigment, a quinacridone pigment, or a carbon black pigment is preferable.

With regard to the pigment, the description in a known reference such as JP5404669B may be appropriately referred to.

From the viewpoint of color tone, examples of the pigment include a cyan pigment, a magenta pigment, a yellow pigment, a black pigment, and a white pigment.

A content of the pigment is preferably 1% by mass to 40% by mass, more preferably 3% by mass to 30% by mass, still more preferably 5% by mass to 25% by mass, and even more preferably 10% by mass to 20% by mass with respect to the total amount of the pigment dispersion.

<Polymer dispersant having crosslinking structure>

The pigment dispersion according to the present disclosure contains at least one polymer dispersant having a crosslinking structure.

The polymer dispersant having a crosslinking structure further contains the unit of Formula (1) (that is, the structural unit represented by Formula (1)) and the unit of Formula (2) (that is, the structural unit represented by Formula (2)).

(Structural unit represented by Formula (1))

The polymer dispersant having a crosslinking structure contains at least one unit of Formula (1) (that is, the structural unit represented by Formula (1)).

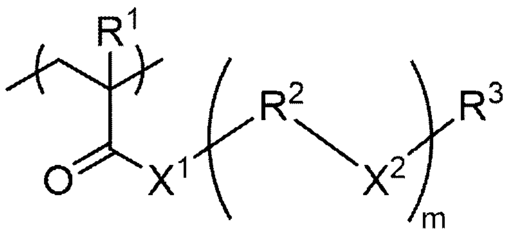

(1)

In Formula (1), $R^1$ represents a hydrogen atom or an alkyl group having 1 to 4 carbon atoms, $R^2$ represents an alkylene group having 2 to 5 carbon atoms, $R^3$ represents an aromatic group, $X^1$ and $X^2$ each independently represent -O- or -NH-, and m represents an integer of 2 or more.

In Formula (1), $R^1$ represents a hydrogen atom or an alkyl group having 1 to 4 carbon atoms.

$R^1$ is preferably a hydrogen atom or an alkyl group having 1 to 3 carbon atoms, more preferably a hydrogen atom, a methyl group, or an ethyl group, and still more preferably a hydrogen atom or a methyl group.

In Formula (1), $R^2$ represents an alkylene group having 2 to 5 carbon atoms.

$R^2$ is preferably an alkylene group having 2 to 4 carbon atoms, more preferably an alkylene group having 2 or 3 carbon atoms, and still more preferably an alkylene group having 2 carbon atoms.

In Formula (1), $R^3$ represents an aromatic group.

The aromatic group represented by $R^3$ includes at least one aromatic ring.

The aromatic ring in the aromatic group represented by $R^3$ may be a monocyclic ring or a polycyclic (for example, fused) ring.

The aromatic group represented by $R^3$ may include a group in which monocyclic rings are linked (for example, a

biphenyl group).

The aromatic group represented by $R^3$ may include a heteroatom (for example, an oxygen atom).

The aromatic ring in the aromatic group represented by $R^3$ may have a substituent.

Examples of the substituent on the aromatic ring include a linear or branched hydrocarbon group (for example, a linear or branched alkyl group, a linear or branched alkenyl group, a linear or branched alkynyl group, and the like) having 1 to 30 carbon atoms (more preferably 1 to 20 carbon atoms), and a halogen atom.

The number of carbon atoms in the aromatic group represented by $R^3$ is preferably 4 to 30, more preferably 6 to 30, still more preferably 6 to 25, and even more preferably 6 to 20.

The aromatic group represented by $R^3$ is preferably a phenyl group, a naphthyl group, a furyl group, a biphenyl group, or an alkylphenyl group having 7 to 30 carbon atoms (preferably 7 to 25 carbon atoms and more preferably 7 to 20 carbon atoms).

In Formula (1), $X^1$ and $X^2$ each independently represent -O- or -NH-.

It is preferable that $X^1$ and $X^2$ are -O-.

In Formula (1), m represents an integer of 2 or more.

m is preferably an integer of 2 to 30, more preferably an integer of 2 to 20, and still more preferably an integer of 2 to 10.

A content of the unit of Formula (1) is preferably 3% by mass to 80% by mass, more preferably 5% by mass to 70% by mass, still more preferably 10% by mass to 60% by mass, and even more preferably 10% by mass to 50% by mass with respect to the total amount of the polymer dispersant having a crosslinking structure.

The content of the unit of Formula (1) is preferably 3% by mass to 80% by mass, more preferably 5% by mass to 70% by mass, still more preferably 10% by mass to 60% by mass, and even more preferably 10% by mass to 50% by mass with respect to the total amount of portions in which the crosslinking structure is excluded from the polymer dispersant having a crosslinking structure.

The unit of Formula (1) can be formed by polymerization of a monomer for forming the unit of Formula (1).

The monomer for forming the unit of Formula (1) is the following monomer (1M).

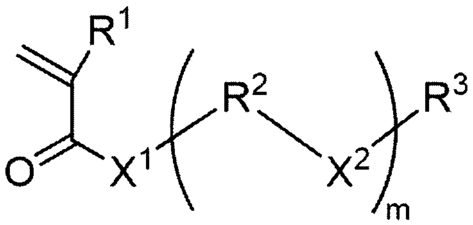

(1M)

$R^1$, $R^2$, $R^3$, $X^1$, $X^2$, -O-, -NH-, and m in the monomer (1M) respectively have the same meanings as $R^1$, $R^2$, $R^3$, $X^1$, $X^2$, -O-, -NH-, and m in Formula (1).

Specific examples of the monomer (1M) can be referred to examples section described later, in which examples of the monomer for forming the unit of Formula (1) are described.

A ratio (% by mass) of an added amount of the monomer (1M) to an added amount of all monomers in a case of producing the polymer dispersant corresponds to the content (% by mass) of the unit of Formula (1) with respect to the total amount of the polymer dispersant described above.

(Structural unit represented by Formula (2))

The polymer dispersant having a crosslinking structure contains at least one unit of Formula (2) (that is, the structural unit represented by Formula (2)).

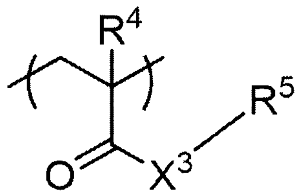

(2)

In Formula (2), $R^4$ represents a hydrogen atom or an alkyl group having 1 to 4 carbon atoms, $R^5$ represents an alkyl group having 8 or more carbon atoms, and $X^3$ represents -O- or -NH-.

In Formula (2), $R^4$ represents a hydrogen atom or an alkyl group having 1 to 4 carbon atoms.

$R^4$ is preferably a hydrogen atom or an alkyl group having 1 to 3 carbon atoms, more preferably a hydrogen atom, a methyl group, or an ethyl group, and still more preferably a hydrogen atom or a methyl group.
In Formula (2), $R^5$ represents an alkyl group having 8 or more carbon atoms.
$R^5$ is preferably an alkyl group having 8 to 50 carbon atoms, more preferably an alkyl group having 8 to 40 carbon atoms, still more preferably an alkyl group having 8 to 30 carbon atoms, even more preferably an alkyl group having 10 to 30 carbon atoms, and even still more preferably an alkyl group having 12 to 25 carbon atoms.
In Formula (2), $X^3$ represents -O- or -NH-.
$X^3$ is preferably -O-.
A content of the unit of Formula (2) is preferably 3% by mass to 80% by mass, more preferably 5% by mass to 70% by mass, still more preferably 10% by mass to 60% by mass, and even more preferably 10% by mass to 50% by mass with respect to the total amount of the polymer dispersant having a crosslinking structure.
The content of the unit of Formula (2) is preferably 3% by mass to 80% by mass, more preferably 5% by mass to 70% by mass, still more preferably 10% by mass to 60% by mass, and even more preferably 10% by mass to 50% by mass with respect to the total amount of portions in which the crosslinking structure is excluded from the polymer dispersant having a crosslinking structure.
The unit of Formula (2) can be formed by polymerization of a monomer for forming the unit of Formula (2).
The monomer for forming the unit of Formula (2) is the following monomer (2M).

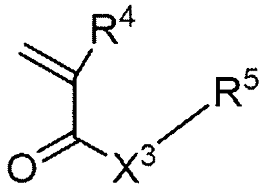
(2M)

$R^4$, $R^5$, and $X^3$ in the monomer (2M) respectively have the same meanings as $R^4$, $R^5$, and $X^3$ in Formula (2).
Specific examples of the monomer (2M) can be referred to examples section described later, in which examples of the monomer for forming the unit of Formula (2) are described.
A ratio (% by mass) of an added amount of the monomer (2M) to an added amount of all monomers in a case of producing the polymer dispersant corresponds to the content (% by mass) of the unit of Formula (2) with respect to the total amount of the polymer dispersant described above.

(Crosslinking structure)

The polymer dispersant having a crosslinking structure in the pigment dispersion according to the present disclosure can be formed by crosslinking an uncrosslinked polymer dispersant (that is, a polymer dispersant not having a crosslinking structure, before being crosslinked).
The polymer dispersant having a crosslinking structure is preferably a reaction product of an uncrosslinked polymer dispersant containing an acid group (for example, a carboxy group) and a crosslinking agent. A crosslinking structure in this case is a structure formed by a reaction (for example, an acid-epoxy reaction) between the acid group and a crosslinkable group of the crosslinking agent (for example, an epoxy group in an epoxy compound).
In the present disclosure, the acid group is a concept including both an unneutralized acid group (for example, a carboxy group) and a neutralized acid group (for example, a salt of the carboxy group (for example, -C(=O)ONa)).
The neutralization will be described later.
The pigment dispersion according to the present disclosure can be preferably produced by dispersing a pigment with an uncrosslinked polymer dispersant containing an acid group to produce a dispersion (hereinafter, referred to as "uncrosslinked dispersion"), mixing the obtained uncrosslinked dispersion with a crosslinking agent, and reacting the acid group in the uncrosslinked polymer dispersant of the uncrosslinked dispersion with the crosslinking agent. By this reaction, the acid group in the uncrosslinked polymer dispersant and the crosslinking agent react with each other to form a crosslinking structure. It is considered that the reaction of forming the crosslinking structure proceeds in a state in which the uncrosslinked polymer dispersant is adsorbed on the surface of the pigment. Therefore, it is considered that the crosslinking structure is formed, and thus an effect of making it difficult for the polymer dispersant to be released from the surface of the pigment is obtained.

-Crosslinking agent-

As the crosslinking agent, a compound having two or more reaction sites with the uncrosslinked polymer dispersant (for example, an uncrosslinked polymer dispersant containing a carboxy group) is preferable.

A preferred combination of the crosslinking agent and the uncrosslinked polymer dispersant is a combination of, as the crosslinking agent, a compound having two or more epoxy groups (that is, a bi- or higher functional epoxy compound) and, as the uncrosslinked polymer dispersant, an uncrosslinked polymer dispersant containing at least one of a carboxy group or a salt thereof.

In the above-described combination, a crosslinking structure is formed by a reaction between at least one of a carboxy group or a salt thereof in the uncrosslinked polymer dispersant containing at least one of a carboxy group or a salt thereof and the epoxy group in the compound having two or more epoxy groups, and thus a polymer dispersant having a crosslinking structure is formed.

The formation of such a crosslinking structure is preferably performed after the pigment is dispersed by the uncrosslinked polymer dispersant containing at least one of a carboxy group or a salt thereof.

Specific examples of the bi- or higher functional epoxy compound, which is the preferred aspect of the crosslinking agent, include ethylene glycol diglycidyl ether, polyethylene glycol diglycidyl ether, 1,6-hexanediol diglycidyl ether, diethylene glycol diglycidyl ether, polyethylene glycol diglycidyl ether, dipropylene glycol diglycidyl ether, polypropylene glycol diglycidyl ether, and trimethylolpropane triglycidyl ether.

Among these, polyethylene glycol diglycidyl ether, diethylene glycol diglycidyl ether, or trimethylolpropane triglycidyl ether is preferable.

As the crosslinking agent, a commercially available product can also be used.

As the commercially available product, for example, Denacol EX-321, EX-821, EX-830, EX-850, and EX-851 (manufactured by Nagase ChemteX Corporation), and the like can be used.

From the viewpoint of a crosslinking reaction rate and/or dispersion stability after the crosslinking, a molar ratio of a crosslinking site in the crosslinking agent (for example, the epoxy group) and a crosslinked site in the uncrosslinked polymer dispersant (for example, the carboxy group or a salt thereof) [Crosslinking site in crosslinking agent (for example, epoxy group): Crosslinked site in uncrosslinked polymer dispersant (for example, carboxy group or salt thereof)] is preferably 1:1.1 to 1:10, more preferably 1:1.1 to 1:5, and still more preferably 1:1.1 to 1:3.

(Uncrosslinked polymer dispersant)

The uncrosslinked polymer dispersant (that is, the polymer dispersant before the crosslinking structure is formed) can also contain the unit of Formula (1) and the unit of Formula (2), similarly to the polymer dispersant having a crosslinking structure. The unit of Formula (1) and the unit of Formula (2) are not changed by the crosslinking structure-forming reaction, and can be maintained as they are even in the polymer dispersant having a crosslinking structure.

A preferred range of the content of the unit of Formula (1) with respect to the total amount of the uncrosslinked polymer dispersant is the same as the preferred range of the content of the unit of Formula (1) with respect to the total amount of portions in which the crosslinking structure is excluded from the polymer dispersant having a crosslinking structure.

A preferred range of the content of the unit of Formula (2) with respect to the total amount of the uncrosslinked polymer dispersant is the same as the preferred range of the content of the unit of Formula (2) with respect to the total amount of portions in which the crosslinking structure is excluded from the polymer dispersant having a crosslinking structure.

The uncrosslinked polymer dispersant can further contain an acid group.

A crosslinking structure is formed by a reaction (for example, an acid-epoxy reaction) between the acid group and the crosslinking agent.

A part of the total number of acid groups in the uncrosslinked polymer dispersant may also remain in the polymer dispersant having a crosslinking structure.

As described above, the acid group contained in the uncrosslinked polymer dispersant may be a neutralized acid group or an unneutralized acid group.

The neutralized acid group is preferably a -C(=O)OM group (here, M represents an alkali metal ion, an ammonium ion, or an organic cation).

Examples of an organic cation include an alkylammonium cation having 1 to 10 carbon atoms, a hydroxy-substituted alkylammonium cation having 1 to 10 carbon atoms, a carboxy-substituted alkylammonium cation having 2 to 10 carbon atoms, and an organic cation having 2 to 10 alkyleneimine units having 2 to 4 carbon atoms.

The unneutralized acid group is preferably a carboxy group (-C(=O)OH group).

The neutralization of the acid group can be performed by reacting a base (hereinafter, also referred to as "neutralizing base") with the uncrosslinked polymer dispersant containing an acid group.

Examples of the neutralizing base include alkali metal hydroxides such as sodium hydroxide and potassium hydroxide; ammonia; and organic amines such as dimethylethanolamine and diisopropylethylamine.

-Neutralization rate-

In the uncrosslinked polymer dispersant, it is preferable that 10% to 90% of the total number of acid groups contained are neutralized (that is, are salts of the acid groups).

In other words, in the uncrosslinked polymer dispersant, a proportion of the neutralized acid group in the total number of the neutralized acid group and the unneutralized acid group (that is, number%; hereinafter, also referred to as "neutralization rate (%)") is preferably 10% to 90%.

In a case where the neutralization rate (%) is 10% to 90%, the crosslinking structure is more easily formed.

The neutralization rate (%) is preferably 20% to 80% and more preferably 20% to 60%.

The neutralization rate (%) is determined by neutralization titration.

-Acid group unit-

It is preferable that both the uncrosslinked polymer dispersant and the polymer dispersant having a crosslinking structure contain a structural unit derived from a monomer containing an acid group (hereinafter, also referred to as "acid group unit").

Here, the structural unit derived from a monomer containing an acid group means a structural unit formed using the monomer containing an acid group as a raw material.

In the structural unit derived from the monomer containing an acid group (that is, the acid group unit), the acid group may remain as it is or may disappear. For example, after the monomer containing an acid group is polymerized to form the structural unit, the acid group in the structural unit may disappear due to the crosslinking structure-forming reaction.

As the monomer containing an acid group, a compound containing an acid group and a polymerizable group is preferable.

As the polymerizable group, a group having an ethylenic double bond is more preferable, and a (meth)acryloyl group, an allyl group, a styryl group, or a vinyl group is still more preferable.

Specific examples of the monomer containing an acid group include (meth)acrylic acid, β-carboxyethyl acrylate, fumaric acid, itaconic acid, maleic acid, and crotonic acid. Among these, (meth)acrylic acid is particularly preferable.

A content of the acid group unit is preferably 10% by mass to 70% by mass, more preferably 15% by mass to 65% by mass, and still more preferably 20% by mass to 60% by mass with respect to the total amount of the uncrosslinked polymer dispersant or the polymer dispersant having a crosslinking structure.

-Hydrophilicity/hydrophobicity ratio-

In a case where the polymer dispersant having a crosslinking structure contains the unit of Formula (1), the unit of Formula (2), and the acid group unit, a hydrophilicity/hydrophobicity ratio represented by the following expression is preferably 8 or more. In this manner, the temporal stability of the pigment dispersion is further improved.

Hydrophilicity/hydrophobicity ratio = (Mass fraction of the unit of Formula (2) in the total mass of the polymer dispersant having a crosslinking structure × Number of carbon atoms in the alkylene group represented by $R^2$ in Formula (2))/(Mass fraction of the acid group unit in the total mass of the polymer dispersant having a crosslinking structure)

From the viewpoint of further improving the temporal stability of the pigment dispersion and the viewpoint of ensuring the affinity of the polymer dispersant having a crosslinking structure with water, the hydrophilicity/hydrophobicity ratio is preferably 8 or more and 60 or less, more preferably 10 or more and 50 or less, and still more preferably 12 or more and 40 or less.

-Ar valence-

In the crosslinked polymer dispersant having a crosslinking structure, from the viewpoint of further improving the temporal stability of the pigment dispersion, an Ar valence represented by the following expression is preferably 0.3 mmol/g to 3.1 mmol/g and more preferably 0.4 mmol/g to 2.9 mmol/g.

Ar valence = (Number of mmol of the unit of Formula (1) per 1 g of the polymer dispersant having a crosslinking structure) × (Number of aromatic rings in the unit of Formula (1))

Here, for an n-fused ring (here, n is an integer of 2 or more), the number of aromatic rings in the unit of Formula (1)

is n.

-Other structural units-

Each of the uncrosslinked polymer dispersant and the polymer dispersant having a crosslinking structure may contain a structural unit other than the unit of Formula (1), the unit of Formula (2), and the acid group unit (hereinafter, also referred to as other structural units).

However, the total proportion of the unit of Formula (1), the unit of Formula (2), and the acid group unit in the total amount of the uncrosslinked polymer dispersant or the polymer dispersant having a crosslinking structure is preferably 70% by mass or more, more preferably 80% by mass or more, and still more preferably 90% by mass or more.

Examples of the other structural units include a structural unit derived from a vinyl monomer.

Examples of the vinyl monomer include methyl (meth)acrylate.

The other structural units in the uncrosslinked polymer dispersant may also remain in the polymer dispersant having a crosslinking structure.

-Weight-average molecular weight (Mw) of uncrosslinked polymer dispersant-

A weight-average molecular weight (Mw) of the uncrosslinked polymer dispersant is not particularly limited, but from the viewpoint of dispersibility of the pigment, it is preferably 3,000 to 200,000, more preferably 5,000 to 150,000, and still more preferably 10,000 to 100,000.

In the present disclosure, the weight-average molecular weight (Mw) is measured by gel permeation chromatography (GPC). In the GPC, HLC-8220 GPC (manufactured by Tosoh Corporation) is used, three columns of TSKgeL Super HZM-H, TSKgeL Super HZ4000, and TSKgeL Super HZ2000 (all trade names manufactured by Tosoh Corporation) are used as columns while being connected in series, and tetrahydrofuran (THF) is used as an eluent. As the conditions, a sample concentration of 0.45% by mass, a flow rate of 0.35 ml/min, a sample injection amount of 10 μl, and a measurement temperature of 40°C are set, and a differential refractive index detector is used. In addition, the calibration curve is created from eight samples of "Standard sample TSK standard, polystyrene" manufactured by Tosoh Corporation: "F-40", "F-20", "F-4", "F-1", "A-5000", "A-2500", "A-1000", and "n-propylbenzene".

In the pigment dispersion according to the present disclosure, a ratio of the content of the pigment and the content of the polymer dispersant having a crosslinking structure based on mass is preferably 1:0.04 to 1:3, more preferably 1:0.05 to 1:1, and still more preferably 1:0.05 to 1:0.5.

In the above-described uncrosslinked dispersion, a ratio of the content of the pigment and the content of the uncrosslinked polymer dispersant based on mass is preferably 1:0.04 to 1:3, more preferably 1:0.05 to 1:1, and still more preferably 1:0.05 to 1:0.5.

The uncrosslinked polymer dispersant can be produced by a known method of copolymerizing each monomer for forming each structural unit (that is, the monomer for forming the unit of Formula (1), the monomer for forming the unit of Formula (2), the monomer containing an acid group, and the like), and then neutralizing the copolymer.

<Other components>

The pigment dispersion according to the present disclosure may contain other components in addition to the above-described components.

Examples of the other components include components which can be contained in an ink composition.

Examples of the other components include a water-soluble organic solvent.

In the present disclosure, the "water-soluble" means a property that 1 g or more of a substance is dissolved in 100 g of water at 25°C.

Specific examples of the water-soluble organic solvent are as follows:

· alcohols (for example, methanol, ethanol, propanol, isopropanol, butanol, isobutanol, secondary butanol, tertiary butanol, pentanol, hexanol, cyclohexanol, and benzyl alcohol);
· polyhydric alcohols (for example, ethylene glycol, diethylene glycol, triethylene glycol, polyethylene glycol, propylene glycol, dipropylene glycol, polypropylene glycol, butylene glycol, hexanediol, pentanediol, glycerin, hexanetriol, thiodiglycol, and 2-methylpropanediol); and
· polyhydric alcohol ethers (for example, ethylene glycol monomethyl ether, ethylene glycol monoethyl ether, ethylene glycol monobutyl ether, diethylene glycol monoethyl ether, diethylene glycol monomethyl ether, diethylene glycol monobutyl ether, propylene glycol monomethyl ether, propylene glycol monobutyl ether, tripropylene glycol monomethyl ether, dipropylene glycol monomethyl ether, dipropylene glycol dimethyl ether, ethylene glycol monomethyl ether acetate, triethylene glycol monomethyl ether, triethylene glycol monoethyl ether, triethylene glycol monobutyl

ether, ethylene glycol monophenyl ether, and propylene glycol monophenyl ether).

The total amount of the water, the pigment, and the polymer dispersant having a crosslinking structure in the total amount of the pigment dispersion according to the present disclosure is preferably 70% by mass or more, more preferably 80% by mass or more, and still more preferably 90% by mass or more.

<Example of method for producing pigment dispersion (production method A)>

An example of a method for producing the pigment dispersion according to the present disclosure (hereinafter, referred to as a production method A) will be described below.
The production method A includes:

a step of producing the unit of Formula (1), the unit of Formula (2), and an acid group-containing polymer containing an acid group;
a step of neutralizing at least a part of the total number of acid groups in the produced acid group-containing polymer with the base to obtain an uncrosslinked polymer dispersant;
a step of dispersing a pigment with the uncrosslinked polymer dispersant in water to obtain an uncrosslinked dispersion containing water, the pigment, and the uncrosslinked polymer dispersant; and
a step of reacting the uncrosslinked polymer dispersant in the uncrosslinked dispersion with the crosslinking agent to obtain a pigment dispersion containing water, the pigment, and a polymer dispersant having a crosslinking structure.

The neutralization of the acid group-containing polymer for obtaining the uncrosslinked polymer dispersant, and preferred aspects thereof are as described above.
The step of obtaining the uncrosslinked dispersion can be performed by a typical pigment dispersion method.
Examples of a disperser used for the pigment dispersion include a ball mill, a roll mill, a sand mill, a beads mill, and a nanomizer.
The reaction between the uncrosslinked polymer dispersant and the crosslinking agent (that is, the formation of the crosslinking structure) in the step of obtaining the pigment dispersion, and preferred aspects thereof are as described above.

[Ink composition]

The ink composition according to the present disclosure contains the above-described pigment dispersion according to the present disclosure.
That is, the ink composition according to the present disclosure contains the components of the pigment dispersion according to the present disclosure described above.
The ink composition according to the present disclosure can be produced by adding any component to the above-described pigment dispersion according to the present disclosure.
In addition, the ink composition according to the present disclosure may be the pigment dispersion according to the present disclosure itself.
That is, the ink composition according to the present disclosure may satisfy the requirements of the pigment dispersion according to the present disclosure described above.
The ink composition according to the present disclosure is preferably an ink jet ink.
For a method of ink jet recording in this case, the description in known documents in the related art can be appropriately referred to.

<Water>

The ink composition according to the present disclosure contains water.
A content of the water with respect to the total amount of the ink composition is preferably 30% by mass or more, more preferably 40% by mass or more, still more preferably 50% by mass or more, and even more preferably 60% by mass or more.
The upper limit value of the content of the water with respect to the total amount of the ink composition is, for example, 90% by mass, 80% by mass, or the like.

<Pigment>

The ink composition according to the present disclosure contains at least one pigment.

A preferred aspect of the pigment is as described in the section of "Pigment dispersion".
A content of the pigment is preferably 1% by mass to 30% by mass, more preferably 1.5% by mass to 20% by mass, still more preferably 2% by mass to 15% by mass, and even more preferably 2% by mass to 10% by mass with respect to the total amount of the ink composition.

<Polymer dispersant having crosslinking structure>

The ink composition according to the present disclosure contains at least one polymer dispersant having a crosslinking structure.
A preferred aspect of the polymer dispersant having a crosslinking structure is as described in the section of "Pigment dispersion".
A ratio of the content of the pigment and the content of the polymer dispersant having a crosslinking structure based on mass is preferably 1:0.04 to 1:3, more preferably 1:0.05 to 1:1, and still more preferably 1:0.05 to 1:0.5.

<Water-soluble organic solvent>

The ink composition according to the present disclosure preferably contains a water-soluble organic solvent.
In this manner, in a case where the ink composition according to the present disclosure is used as an ink jet ink, jettability from an ink jet head is improved.
Specific examples of the water-soluble organic solvent are as described in the section of "Pigment dispersion".
A content of the water-soluble organic solvent is preferably 5% by mass to 40% by mass, more preferably 10% by mass to 30% by mass, and still more preferably 15% by mass to 30% by mass with respect to the total amount of the ink composition.

<Urea>

The ink composition according to the present disclosure preferably contains urea.
The urea functions as a solid wetting agent.
A content of the urea is preferably 1% by mass to 10% by mass, more preferably 2% by mass to 9% by mass, and still more preferably 3% by mass to 8% by mass with respect to the total amount of the ink composition.

<Other components>

The ink composition according to the present disclosure may contain other components.
As the other components, for example, additives such as a surfactant, resin particles, a water-soluble resin, a silicon compound, an ultraviolet absorber, an antioxidant, a fading inhibitor, a conductive salt, and a basic compound (pH adjuster) may be contained.
Regarding the components which can be contained in the ink composition, known documents such as JP2015-193729A and JP2016-069487A can be appropriately referred to.

<Physical properties>

A pH (25°C) of the ink composition is preferably 7 to 10 and more preferably 7.5 to 9.5.
The pH is measured at 25°C using a pH meter, such as a pH meter (model number "HM-31") manufactured by DKK-Toa Corporation.
A viscosity (30°C) of the ink composition is preferably 0.5 mPa·s to 30 mPa·s, more preferably 2 mPa·s to 20 mPa·s, still more preferably 2 mPa·s to 15 mPa·s, and even more preferably 3 mPa·s to 10 mPa·s.
The viscosity is a value measured at 25°C using a viscometer. The viscosity is measured at 25°C using a viscometer, for example, a TV-22 type viscometer manufactured by Toki Sangyo Co., Ltd.
A surface tension (25°C) of the ink composition is preferably 60 mN/m or less, more preferably 20 mN/m to 50 mN/m, and still more preferably 30 mN/m to 45 mN/m.
The surface tension is measured at 25°C using a surface tension meter, for example, by a plate method using an automatic surface tension meter (product name "CBVP-Z") manufactured by Kyowa Interface Science Co., Ltd.

Examples

Hereinafter, the present disclosure will be described in more detail using Examples. However, the present disclosure is not limited to the following examples as long as it does not exceed the gist of the present invention.

Hereinafter, a polymer dispersant may be simply referred to as "dispersant".

<Synthesis of uncrosslinked dispersant>

Dispersants A1 to A28 and comparative dispersants C1 to C3 shown in Table 1 were synthesized as uncrosslinked dispersants.

(Synthesis of dispersant A1)

153.5 parts by mass of tripropylene glycol monomethyl ether (product name "MFTG", manufactured by NIPPON EMULSIFIER CO., LTD.) as a reaction solvent was charged into a reaction container equipped with a gas introduction pipe, a thermometer, a condenser, and a stirrer, and the inside of the reaction container was replaced with nitrogen gas.

Next, the inside of the reaction container was heated to 85°C, and a mixture of 76.8 parts by mass of MFTG as a reaction solvent, 16 parts by mass of nonylphenoxypentapropylene glycol acrylate ($NPh(PO)_5A$) as a monomer for forming the unit of Formula (1), 28 parts by mass of stearyl methacrylate (STMA) as a monomer for forming the unit of Formula (2), 54 parts by mass of methacrylic acid (MAA) as a monomer for forming the acid group-containing unit, 2 parts by mass of methyl methacrylate (MMA) as another monomer, and 3 parts by mass of V-601 (manufactured by FUJIFILM Wako Pure Chemical Corporation) as a polymerization initiator was added dropwise thereto over 3 hours to carry out a polymerization reaction. After completion of the dropwise addition, the mixture was further reacted at 85°C for 4 hours to obtain a solution containing a polymer.

After cooling the obtained solution to room temperature, 251 parts by mass of a 1 mol/L NaOH aqueous solution as an aqueous solution of a neutralizing base was added thereto to neutralize 40% of the total number of carboxy groups in the polymer (that is, the polymer was neutralized at a neutralization rate of 40%). Water was added to the neutralized solution such that a content of a dispersant A1 was 5.6% by mass, thereby obtaining a solution of a dispersant A1.

Table 1 shows the type and amount (part by mass) of the monomer for forming the uncrosslinked dispersant; the neutralizing base for the neutralization of the carboxy group in the uncrosslinked dispersant; the neutralization rate (%) of the carboxy group in the uncrosslinked dispersant; the weight-average molecular weight (Mw) of the uncrosslinked dispersant; the hydrophilicity/hydrophobicity ratio of the crosslinked dispersant; and the Ar value [mmol/g] of the crosslinked dispersant.

The method of measuring Mw, the method of calculating the hydrophilicity/hydrophobicity ratio, and the method of calculating the Ar value are as described above.

In the classification of the monomers in Table 1, "Formula (1)", "Formula (2)", "Acid group", and "Others" respectively indicates the monomer for forming the unit of Formula (1), the monomer for forming the unit of Formula (2), the monomer for forming the acid group-containing unit, and other monomers.

(Synthesis of dispersants A2 to A28 and comparative dispersants C1 to C3)

Dispersants A2 to A28 and comparative dispersants C1 to C3 were synthesized as uncrosslinked dispersants in the same manner as in the synthesis of the dispersant A1, except that the blending formulation (type and amount added) of the monomers and the neutralizing base were changed as shown in Table 1.

[Example 1]

<Production of uncrosslinked dispersion>

A mixture having the following formulation was pre-dispersed to be uniform, and then subjected to a dispersion treatment for 3 hours using a beads mill (bead diameter: 0.1 mmφ, zirconia beads). In this manner, an uncrosslinked dispersion in which the magenta pigment was dispersed by the dispersant A1 was obtained.

-Formulation of uncrosslinked dispersion-

· Pigment Red 122 (magenta pigment) ... 20.4 parts by mass
· Solution of dispersant A1 (uncrosslinked dispersant) ... 35.8 parts by mass
· MFTG ... 6.1 parts by mass
· Water ... 73.7 parts by mass

<Production of crosslinked dispersion>

Next, a mixture having the following formulation was reacted at 70°C for 6 hours and cooled to 25°C to crosslink the dispersant A1 (uncrosslinked polymer dispersant) in the uncrosslinked dispersion with a crosslinking agent, thereby obtaining a crosslinked dispersion containing water, the pigment, and a polymer dispersant having a crosslinking structure (hereinafter, also referred to as "crosslinked dispersant").

-Formulation-

· Uncrosslinked dispersion ... 136.0 parts by mass
· "Denacol EX-321" (manufactured by Nagase ChemteX Corporation, trimethylolpropane polyglycidyl ether; crosslinking agent) ... 3.0 parts by mass

<Production of pigment dispersion as target product>

Next, the crosslinked dispersion was subjected to ultrafiltration by being allowed to flow through an ultrafiltration device (crossflow-type ultrafilter (UF), manufactured by Sartorius AG) equipped with a polyether sulfone (PESU) membrane (size of micropores: 0.1 μm) at a flow rate of 600 mL per minute. At this time, the liquid temperature was adjusted to 25°C, and the ultrafiltration was performed 10 times by setting 1 time of the volume magnification of the charged liquid as 1 time. Thereafter, deionized water was added thereto such that a concentration of the pigment was 15% by mass.
In this manner, a pigment dispersion (hereinafter, referred to as "pigment dispersion A") containing water, the pigment, and the crosslinked dispersant (that is, the polymer dispersant having a crosslinking structure) was obtained as a target product.

<Preparation of ink composition>

A mixture having the following formulation was stirred and mixed to be uniform, thereby obtaining an ink composition.
The following ink composition contains 5 parts by mass of the pigment and 1.5 parts by mass of the dispersant.

-Formulation of ink composition-

· Pigment dispersion A ... 33.3 parts by mass
· Propylene glycol (water-soluble organic solvent) ... 20.0 parts by mass
· Hexyl glycol (water-soluble organic solvent) ... 3.4 parts by mass
· Urea ... 5.0 parts by mass
· Water ... 38.3 parts by mass

<Evaluation of temporal stability of ink composition>

The ink composition (30 mL) was packed into a sample bottle and sealed. Hereinafter, this ink composition will be referred to as "ink before storage".
Next, the ink before heating was heated to 80°C, and then stored at 80°C for 24 hours. Hereinafter, the ink after being left to stand at 80°C for 24 hours will be referred to as "ink after storage".
For each of the ink before storage and the ink after storage, an average particle diameter was measured with Nanotrac wave II (manufactured by MicrotracBEL Corp.), and a rate of change in particle diameter was determined according to the following expression.

Rate of change in particle diameter (%) = [((Average particle diameter of ink after storage) - (Average particle diameter of ink before storage))/(Average particle diameter of ink before storage)] × 100

Based on the obtained rate of change in particle diameter, the temporal stability of the ink composition was determined according to the following evaluation standard.

In the following evaluation standard, the rank at which the temporal stability of the ink composition was most excellent is "A".

-Evaluation standard for temporal stability-

A: rate of change in particle diameter was less than 10%.
B: rate of change in particle diameter was 10% or more and less than 25%.
C: rate of change in particle diameter was 25% or more and less than 50%.
D: rate of change in particle diameter was 50% or more.

[Examples 2 to 30 and Comparative Examples 1 to 3]

The same operation as in Example 1 was performed except that the type of the uncrosslinked dispersant and the type of the pigment were changed as shown in Table 1.
The results are shown in Table 1.

[Table 1]

| | Pigment dispersion | | | | | | | | | | | | | | | Evaluation |
|---|---|---|---|---|---|---|---|---|---|---|---|---|---|---|---|---|
| | Uncrosslinked dispersant | | | | | | | | | | | | Crosslinked dispersant | | Pigment | Temporal stability of ink |
| | No. | Type of monomer | | | | Added amount of monomer (part by mass) | | | | Neutralizing base | Neutralization rate [%] | Mw | Hydrophilicity/hydrophobicity ratio | Ar value [mmol/g] | | |
| | | Formula (1) | Formula (2) | Acid group | Others | Formula (1) | Formula (2) | Acid group | Others | | | | | | | |
| Example 1 | A1 | $NPh(PO)_5A$ | STMA | MAA | MMA | 16 | 28 | 54 | 2 | NaOH | 40 | 32000 | 9 | 0.3 | PR122 | B |
| Example 2 | A2 | $NPh(PO)_5A$ | STMA | MAA | - | 16 | 42 | 42 | - | NaOH | 40 | 26000 | 18 | 0.3 | PR122 | B |
| Example 3 | A3 | $NPh(PO)_5A$ | STMA | MAA | - | 24 | 26 | 50 | - | NaOH | 40 | 26000 | 9 | 0.4 | PR122 | B |
| Example 4 | A4 | $NPh(EO)_8A$ | STMA | MAA | MMA | 17 | 27.7 | 53 | 2.3 | NaOH | 40 | 30000 | 9 | 0.3 | PR122 | B |
| Example 5 | A5 | $OPhPh(EO)_2A$ | STMA | MAA | MMA | 49 | 17 | 33 | 1 | NaOH | 40 | 31000 | 9 | 3.1 | PR122 | B |
| Example 6 | A6 | $Ph(EO)_2A$ | LMA | MAA | MMA | 24 | 31.5 | 40.5 | 4 | NaOH | 40 | 28000 | 9 | 1.0 | PR122 | B |
| Example 7 | A7 | $NPh(EO)_8A$ | STMA | MAA | MMA | 17 | 39 | 37 | 7 | NaOH | 40 | 27000 | 19 | 0.3 | PR122 | B |
| Example 8 | A8 | $NptPh(EO)_2MA$ | STMA | AA | - | 44.5 | 29 | 26.5 | - | NaOH | 40 | 27000 | 20 | 3.0 | PR122 | B |
| Example 9 | A9 | $NPh(PO)_5A$ | STMA | AA | MMA | 24 | 36.4 | 31 | 8.6 | NaOH | 40 | 25000 | 21 | 0.4 | PR122 | B |
| Example 10 | A10 | $Ph(EO)_2A$ | STMA | MAA | MMA | 24 | 36.5 | 37 | 2.5 | NaOH | 95 | 29000 | 18 | 1.0 | PR122 | B |
| Example 11 | A11 | $Ph(EO)_2A$ | STMA | MAA | MMA | 24 | 36.5 | 37 | 2.5 | NaOH | 5 | 29000 | 18 | 1.0 | PR122 | B |
| Example 12 | A12 | $Ph(EO)_2A$ | STMA | MAA | MMA | 24 | 36.5 | 37 | 2.5 | NaOH | 40 | 29000 | 18 | 1.0 | PR122 | A |
| Example 13 | A13 | $Ph(EO)_2A$ | VA | MAA | MMA | 24 | 36.5 | 37 | 2.5 | NaOH | 40 | 31000 | 22 | 1.0 | PR122 | B |
| Example 14 | A14 | $Ph(EO)_2A$ | STMA | AA | MMA | 24 | 36.4 | 31 | 8.6 | NaOH | 40 | 26000 | 21 | 1.0 | PR122 | A |
| Example 15 | A15 | $Ph(EO)_2A$ | STMA | MAA | - | 24 | 39 | 37 | - | NaOH | 40 | 29000 | 19 | 1.0 | PR122 | A |
| Example 16 | A16 | $Fu(EO)_A2$ | STMA | MAA | - | 24 | 39 | 37 | - | NaOH | 40 | 29000 | 19 | 1.1 | PR122 | B |
| Example 17 | A17 | $Ph(EO)_4A$ | STMA | AA | MMA | 24 | 36.4 | 31 | 8.6 | NaOH | 40 | 26000 | 21 | 0.7 | PR122 | A |
| Example 18 | A18 | $NPh(EO)_4A$ | STMA | AA | MMA | 24 | 36.4 | 31 | 8.6 | NaOH | 40 | 25000 | 21 | 0.5 | PR122 | A |
| Example 19 | A19 | $Ph(EO)_2A$ | STMA | MAA | - | 13 | 31.5 | 55.5 | - | NaOH | 40 | 33000 | 10 | 0.6 | PR122 | B |
| Example 20 | A20 | $NPh(EO)_8A$ | STMA | MAA | - | 25 | 36 | 39 | - | NaOH | 40 | 27000 | 17 | 0.4 | PR122 | A |
| Example 21 | A21 | $OPhPh(EO)_2A$ | STMA | AA | MMA | 45 | 31.5 | 22 | 1.5 | NaOH | 40 | 32000 | 26 | 2.9 | PR122 | A |
| Example 22 | A22 | $Ph(EO)_2A$ | STMA | MAA | MMA | 24 | 36.5 | 37 | 2.5 | NaOH | 80 | 29000 | 18 | 1.0 | PR122 | B |
| Example 23 | A10 | $Ph(EO)_2A$ | STMA | MAA | MMA | 24 | 36.5 | 37 | 2.5 | NaOH | 95 | 29000 | 18 | 1.0 | PY150 | B |

(continued)

| | Pigment dispersion | | | | | | | | | | | | | | | Evaluation |
|---|---|---|---|---|---|---|---|---|---|---|---|---|---|---|---|---|
| | Uncrosslinked dispersant | | | | | | | | | | | | Crosslinked dispersant | | Pigment | Temporal stability of ink |
| | No. | Type of monomer | | | | Added amount of monomer (part by mass) | | | | Neutralizing base | Neutralization rate [%] | Mw | Hydrophilicity/hydrophobicity ratio | Ar value [mmol/g] | | |
| | | Formula (1) | Formula (2) | Acid group | Others | Formula (1) | Formula (2) | Acid | Others group | | | | | | | |
| Example 24 | A10 | $Ph(EO)_2A$ | STMA | MAA | MMA | 24 | 36.5 | 37 | 2.5 | NaOH | 95 | 29000 | 18 | 1.0 | PB15:3 | B |
| Example 25 | A23 | $Ph(EO)_2A$ | STMA | MAA | MMA | 24 | 36.5 | 37 | 2.5 | NaOH | 40 | 96000 | 18 | 1.0 | PR122 | B |
| Example 26 | A24 | $Ph(EO)_2A$ | STMA | MAA | MMA | 24 | 36.5 | 37 | 2.5 | NaOH | 40 | 10000 | 18 | 1.0 | PR122 | A |
| Example 27 | A25 | $Ph(EO)_2A$ | STMA | MAA | - | 40 | 40 | 20 | - | NaOH | 40 | 30000 | 36 | 1.7 | PR122 | A |
| Example 28 | A26 | $Ph(EO)_2A$ | STMA | MAA | MMA | 24 | 36.5 | 37 | 2.5 | $NH_3$ | 40 | 28000 | 18 | 1.0 | PR122 | A |
| Example 29 | A27 | $Ph(EO)_2A$ | STMA | MAA | MMA | 24 | 36.5 | 37 | 2.5 | DMEA | 40 | 30000 | 18 | 1.0 | PR122 | A |
| Example 30 | A28 | $Ph(EO)_2A$ | STMA | MAA | MMA | 24 | 36.5 | 37 | 2.5 | DIPEA | 40 | 30000 | 18 | 1.0 | PR122 | A |
| Comparative Example 1 | C1 | PhEMA | STMA | MAA | MMA | 21 | 36.5 | 37 | 5.5 | NaOH | 40 | 28000 | 18 | 1.0 | PR122 | C |
| Comparative Example 2 | C2 | BzMA | STMA | MAA | MMA | 18 | 37 | 37 | 8 | NaOH | 40 | 27000 | 18 | 1.0 | PR122 | D |
| Comparative Example 3 | C3 | $Ph(EO)_2A$ | HA | MAA | MMA | 24 | 36.5 | 37 | 2.5 | NaOH | 40 | 30000 | 6 | 1.0 | PR122 | D |

Regarding the pigments in Table 1, PR122, PY150, and PB15:3 respectively indicate Pigment Red 122, Pigment Yellow 150, and Pigment Blue 15:3.

Abbreviations and structures of the monomers in Table 1 are as follows.

$NPh(PO)_5A$: nonylphenoxypentapropylene glycol acrylate
$NPh(EO)_8A$: nonylphenoxyoctaethylene glycol acrylate
$OPhPh(EO)_2A$: orthophenylphenoxyethylene glycol acrylate
$Ph(EO)_2A$: phenoxydiethylene glycol acrylate
$Npt(EO)_2A$: naphthoxydiethylene glycol methacrylate
$Fu(EO)_2A$: furyldiethylene glycol acrylate
$Ph(EO)_4A$: phenoxytetraethylene glycol acrylate
$NPh(EO)_4A$: nonylphenoxytetraethylene glycol acrylate
PhEMA: phenoxyethyl methacrylate
BzMA: benzyl methacrylate
STMA: stearyl methacrylate
LMA: lauryl methacrylate
VA: behenyl acrylate
HA: hexyl acrylate
MAA: methacrylic acid
AA: acrylic acid
MMA: methyl methacrylate

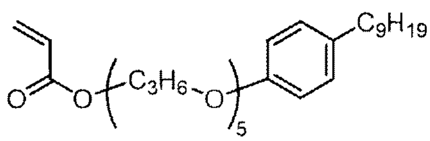
$NPh(PO)_5A$

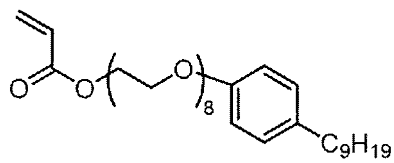
$NPh(EO)_8A$

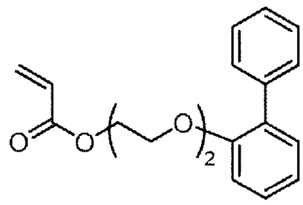
$OPhPh(EO)_2A$

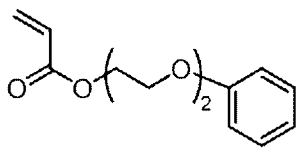
$Ph(EO)_2A$

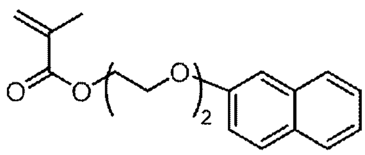
$Npt(EO)_2MA$

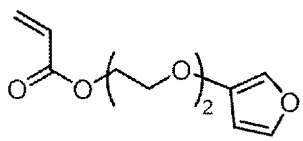
$Fu(EO)_2A$

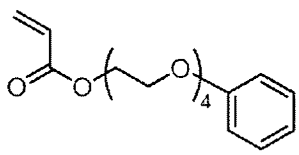
$Ph(EO)_4A$

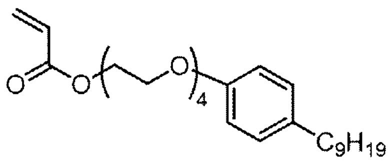
$NPh(EO)_5A$

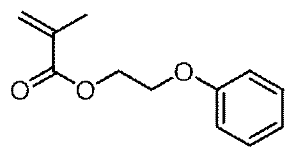
PhEMA

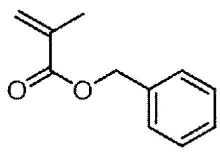
BzMA

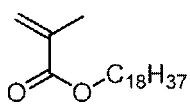
STMA

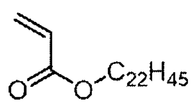
VA

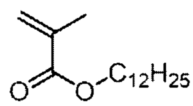
LMA

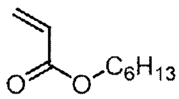

HA

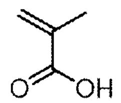

MAA

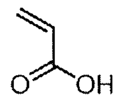

AA

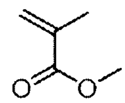

MMA

In the neutralizing bases in Table 1, DMEA indicates dimethylethanolamine, and DIPEA indicates diisopropylethylamine.

As shown in Table 1, any of Examples had favorable temporal stability of the ink.

In any of Examples, a dispersant in which m in Formula (1) was an integer of 2 or more and $R^5$ in Formula (2) was an alkyl group having 8 or more carbon atoms was used as the crosslinked dispersant in the pigment dispersion.

Contrary to Examples, Comparative Examples had the following results.

Comparative Example 1 was a comparative example in which m in Formula (1) was changed to 1 (specifically, the unit of Formula (1) was changed to a PhEMA unit).

Comparative Example 2 was a comparative example in which m in Formula (1) was changed to 0 (specifically, the unit of Formula (1) was changed to a BzMA unit).

Comparative Example 3 was a comparative example in which the number of carbon atoms in the alkyl group represented by $R^5$ in Formula (2) was changed to 6 (specifically, the unit of Formula (2) was changed to a HA unit).

In any of Comparative Examples 1 to 3, the temporal stability of the ink was deteriorated.

The disclosure of Japanese Patent Application No. 2023-059325 filed on March 31, 2023 is incorporated in the present specification by reference. All documents, patent applications, and technical standards described in the present specification are incorporated herein by reference to the same extent as in a case of being specifically and individually noted that individual documents, patent applications, and technical standards are incorporated herein by reference.

## Claims

**1.** A pigment dispersion comprising:

water;
a pigment; and
a polymer dispersant having a crosslinking structure,
wherein the polymer dispersant having a crosslinking structure further contains a structural unit represented by Formula (1) and a structural unit represented by Formula (2),

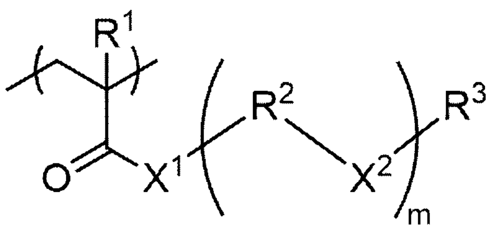

(1)

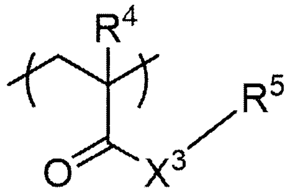

(2)

in Formula (1),
$R^1$ represents a hydrogen atom or an alkyl group having 1 to 4 carbon atoms,
$R^2$ represents an alkylene group having 2 to 5 carbon atoms,
$R^3$ represents an aromatic group,
$X^1$ and $X^2$ each independently represent -O- or -NH-, and
m represents an integer of 2 or more,
in Formula (2),
$R^4$ represents a hydrogen atom or an alkyl group having 1 to 4 carbon atoms,
$R^5$ represents an alkyl group having 8 or more carbon atoms, and
$X^3$ represents -O- or -NH-.

**2.** The pigment dispersion according to claim 1,

wherein the polymer dispersant having a crosslinking structure further contains a structural unit derived from a monomer containing an acid group, and a hydrophilicity/hydrophobicity ratio represented by the following

expression is 8 or more,
the hydrophilicity/hydrophobicity ratio
= (a mass fraction of the structural unit represented by Formula (2) in a total mass of the polymer dispersant having a crosslinking structure × the number of carbon atoms in the alkylene group represented by $R^2$ in Formula (2))/(a mass fraction of the structural unit derived from the monomer containing an acid group in the total mass of the polymer dispersant having a crosslinking structure).

**3.** The pigment dispersion according to claim 1,

wherein an Ar valence of the polymer dispersant having a crosslinking structure, which is represented by the following expression, is 0.4 mmol/g to 2.9 mmol/g,
the Ar valence
= (the number of mmol of the structural unit represented by Formula (1) per 1 g of the polymer dispersant having a crosslinking structure) × (the number of aromatic rings in the structural unit represented by Formula (1)).

**4.** The pigment dispersion according to claim 1,
wherein $R^2$ in Formula (1) represents an alkylene group having 2 carbon atoms.

**5.** The pigment dispersion according to claim 1,

wherein the polymer dispersant having a crosslinking structure is formed by crosslinking an uncrosslinked polymer dispersant, and
the uncrosslinked polymer dispersant contains the structural unit represented by Formula (1), the structural unit represented by Formula (2), and an acid group, and 10% to 90% of a total number of acid groups contained are neutralized.

**6.** An ink composition comprising:
the pigment dispersion according to any one of claims 1 to 5.

**INTERNATIONAL SEARCH REPORT**

International application No.
**PCT/JP2024/009132**

**A. CLASSIFICATION OF SUBJECT MATTER**

***C09D 17/00***(2006.01)i; ***C09B 67/20***(2006.01)i; ***C09B 67/46***(2006.01)i; ***C09C 3/10***(2006.01)i; ***C09D 11/03***(2014.01)i
FI: C09D17/00; C09D11/03; C09C3/10; C09B67/20 L; C09B67/46 B

According to International Patent Classification (IPC) or to both national classification and IPC

**B. FIELDS SEARCHED**

Minimum documentation searched (classification system followed by classification symbols)

C09D17/00; C09B67/20; C09B67/46; C09C3/10; C09D11/03

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2021-109912 A (TOYO INK SC HOLDINGS CO., LTD.) 02 August 2021 (2021-08-02) paragraphs [0103]-[0105], [0116], [0117], [0119], [0120], [0134], [0135], tables 1, 4-6 | 1-2, 4-6 |
| Y | paragraphs [0008], [0028], [0103]-[0105], [0116], [0117], [0119], [0120], [0134], [0135], tables 1, 4-6 | 3 |
| X | JP 2016-135849 A (KAO CORPORATION) 28 July 2016 (2016-07-28) paragraphs [0035], [0051], [0055]-[0057], [0062], tables 1, 2, example 1 | 1-2, 4-6 |
| Y | paragraphs [0035], [0051], [0055]-[0057], [0062], tables 1, 2, example 1 | 3 |
| Y | JP 2015-108063 A (RICOH COMPANY, LTD.) 11 June 2015 (2015-06-11) paragraph [0025] | 3 |
| A | WO 2018/154787 A1 (HITACHI CHEMICAL COMPANY, LTD.) 30 August 2018 (2018-08-30) paragraph [0033] | 1-6 |

☐ Further documents are listed in the continuation of Box C.   ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 May 2024** | **28 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | Telephone No. |

Form PCT/ISA/210 (second sheet) (July 2022)

**INTERNATIONAL SEARCH REPORT**
**Information on patent family members**

International application No.
**PCT/JP2024/009132**

| Patent document cited in search report | Publication date (day/month/year) | Patent family member(s) | Publication date (day/month/year) |
|---|---|---|---|
| JP 2021-109912 A | 02 August 2021 | (Family: none) | |
| JP 2016-135849 A | 28 July 2016 | US 2018/0009988 A1 paragraphs [0129], [0196], [0215]-[0229], [0237]-[0241], tables 1, 2, example 1 | |
| JP 2015-108063 A | 11 June 2015 | (Family: none) | |
| WO 2018/154787 A1 | 30 August 2018 | US 2020/0235397 A1 paragraph [0058] | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2016069487 A
- JP 2002012607 A
- JP 2002188025 A
- JP 2003026978 A
- JP 2003342503 A
- JP 2015193729 A
- JP 5404669 B
- JP 2023059325 A